# EUROPÄISCHE PATENTANMELDUNG

(11) **EP 0 530 737 A2**
(43) Veröffentlichungstag der Anmeldung: **10.03.1993**
(21) Anmeldenummer: 92114889.6
(22) Anmeldetag: 01.09.1992
(51) Int. Cl.: B09B 3/00

(54) **Einrichtung zum Trennen von Filtereinsätzen**

(30) Priorität: 05.09.1991 DE 4129464
(71) Anmelder: FILTERWERK MANN & HUMMEL GMBH, D-71631 Ludwigsburg (DE); MANFRED KLENK TECHNISCHER ANLAGENBAU, 73553 Alfdorf (DE)
(72) Erfinder: Klenk, Manfred, W-7077 Alfdorf 2 (DE)
(74) Vertreter: Voth, Gerhard, Dipl.-Ing.

(57) **Zusammenfassung**

Es wird eine Einrichtung zum Trennen von Filtereinsätzen, insbesondere von Ölwechselfiltern vorgeschlagen. Die üblichen Filtereinsätze bestehen aus einem Filterpapierelement und einem metallischen innen liegenden Stützrohr sowie metallischen Endscheiben. Die Einrichtung weist zwei Auflageschienen 15, 16 auf, die in einem Rahmen 11 gegeneinander verschiebbar gelagert sind. Senkrecht zu der Verschieberichtung der beiden Auflageschienen 15, 16 ist ein Stempel vorgesehen, der mittels eines Druckluftzylinders eine Bewegung längs der Senkrechten ausführt, dserart, daß ein Stempel 26 einen auf die beiden Auflageschienen aufgelegten Filtereinsatz 19 zusammenpreßt und damit die Endscheiben 21, 22 von dem Filterpapierelement 20 abtrennt.

## Beschreibung

Die Erfindung betrifft eine Einrichtung zum Trennen von Filtereinsätzen.

In Kraftfahrzeugen ist zur Filtrierung des Motorenöls die Verwendung von ölwechselfiltern allgemein bekannt. Diese Ölwechselfilter bestehen aus einem Gehäuse, das mit dem Boden mittels eines Deckels unlösbar verbunden ist. In diesem Boden sind die Zufluß- und Abflußöffnungen des zu filtrierenden Öls vorgesehen. In dem Gehäuse befindet sich ein Filtereinsatz, welcher in der Regel als Papierstern ausgeführt ist. Außerdem kann in dem Gehäuse ein Kurzschlußventil oder auch ein Verschlußventil angeordnet sein. Letzteres verhindert das Leerlaufen des Filters bei abgestelltem Motor.

Ein solches Filter muß nach einer gewissen Zeit der Benutzung ausgetauscht und durch ein neues ersetzt werden. Die Beseitigung derartiger, in ihrem Innern im allgemeinen noch eine gewisse Menge an Altöl aufweisender Ölwechselfilter in ihrer Gesamtheit ist problematisch. Eine problemlose Entsorgung ist deshalb nur dann möglich, wenn dieses Ölwechselfilter in seine einzelnen Bestandteile zerlegt wird, so daß diese wiederverwendet oder gefahrlos entsorgt werden können.

Aus der DE-OS 37 05 391 ist eine Anlage zur Entsorgung, Beseitigung und Aufarbeitung benutzter Ölfilter bekannt. Bei dieser Anlage werden einzelne Ölfilter über eine Fördereinrichtung in eine definierte Endposition gebracht, anschließend einer Schneidestation zugeführt und in einer nachfolgenden Trennanlage das Filterpapier von dem Träger befreit. Mit dieser Anlage soll die Möglichkeit geschaffen werden, eine größere Menge Ölfilter in kurzer Zeit zu demontieren. Ein Nachteil dieser Anlage ist darin zu sehen, daß diese sehr aufwendig ist und deshalb nur bei einem hohen Durchsatz an aufzuarbeitenden Ölfiltern eine Anwendung zweckmäßig erscheint. Durch die Verwendung von Handhabungseinrichtungen zum lagerichtigen Positionieren der aufzuarbeitenden Ölfilter besteht außerdem noch der Nachteil, daß Filter, die beim Ausbau aus dem Kraftfahrzeug beschädigt oder eingedrückt wurden, wie dies beim größten Teil der Wechselfilter der Fall ist, den Arbeitsablauf stören und damit einen Stillstand der Anlage verursachen.

Ein weiterer Nachteil dieser Anlage besteht darin, daß zwar das Gehäuse von dem Filtereinsatz getrennt wird, der Filtereinsatz selbst aber nur unvollständig in seine einzelnen Bestandteile zerlegt wird. Dieser Filtereinsatz besteht aus einem Filterpapierelement, einem sogenannten Papierstern, der stirnseitig durch zwei Endscheiben abgedichtet ist und ein metallisches Mittelrohr aufweist. Diesen Filtereinsatz in seiner Gesamtheit als Sondermüll zu entsorgen, ist unwirtschaftlich.

Der Erfindung liegt daher die Aufgabe zugrunde, die genannten Nachteile zu vermeiden und eine Vorrichtung zu schaffen, mit der eine Zerlegung der Filtereinsätze in die einzelnen Bestandteile möglich ist.

Diese Aufgabe wird durch die Merkmale des Hauptanspruchs gelöst.

Ein wesentlicher Vorteil der Lösung ist darin zu sehen, daß mit relativ einfachen Elementen, nämlich mit Auflageschienen, die gleichzeitig Schermesser für die Endscheiben darstellen und einem Stempel, der auf den Filtereinsatz einwirkt, die Trennung von Endscheiben und Filterpapierelement erfolgt. Nachdem die Endscheiben von dem Filterpapierelement abgeschert sind, kann das Stützrohr aus dem Filterpapierelement herausgeschoben werden.

Ein weiteres Merkmal der Erfindung ist die nach Art eines Werkzeugschlittens längsbewegliche Lagerung der beiden Auflageschienen. Dies ist vor allem wegen der unterschiedlichen Längenabmessungen der zu entsorgenden Filtereinsätzen zweckmäßig. Durch die hohe Anzahl von Varianten an Filtereinsätzen ist eine stufenlose Verstellung besonders vorteilhaft. Nach einer Weiterbildung der Erfindung ist vorgesehen, die Auflageschienen mittels einer Antriebseinheit gegeneinander zu verschieben. Eine solche Antriebseinheit kann beispielsweise eine Gewindespindel sein, die manuell oder mittels eines geeigneten Motors die Auflageschienen bewegt.

Filtereinsätze namhafter Filterhersteller weisen normierte Längen auf. Um die Auflageschienen auf die Größe dieser Filtereinsätze einzustellen, ist gemäß einer Weiterbildung der Erfindung vorgesehen, diese Normierung auf eine am Rahmen angeordneten Markierung zu übertragen, so daß die Auflageschienen entsprechend der Größe des zu entsorgenden Filters voreingestellt werden können. Damit kann die Anpassung der Auflageschienen an den entsprechenden Filtereinsatz wesentlich schneller vorgenommen werden.

Nach einer Weiterbildung der Erfindung ist vorgesehen, den Zylinder des Stempels als einen Pneumatikzylinder auszubilden, welcher mittels Druckluft bewegbar ist.

Eine weitere Ausgestaltung der Erfindung sieht vor, auf den Auflageschienen Stützelemente in Form von Lagerklötzen vorzusehen. Selbstverständlich besteht auch die Möglichkeit, die Auflageschienen im Aufnahmebereich des Filtereinsatzes V-förmig auszubilden, um eine definierte Lage des Filtereinsatzes zu gewährleisten. Die Erfindung wird nachfolgend anhand eines Ausführungsbeispiels näher erläutert.

Es zeigt:
- Figur 1: eine Seitenansicht der Einrichtung zum Trennen von Filtereinsätzen
- Figur 2: eine Vorderansicht der in Figur 1 gezeigten Einrichtung
- Figur 3: eine Draufsicht auf einen Rahmen mit Auflageschienen einer Einrichtung gemäß Figur 1.

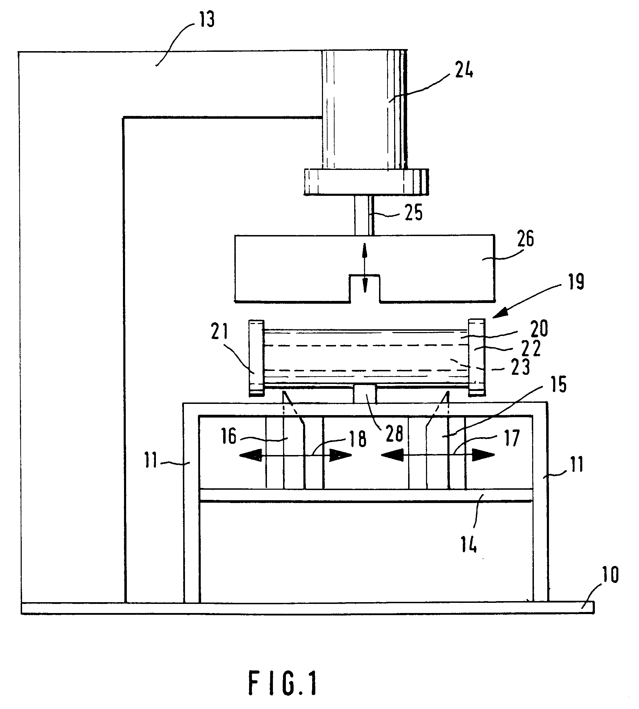

Die in Figur 1 gezeigte Einrichtung besteht aus einem Untergestell 10, auf dem ein Rahmen 11, 12 und ein Träger 13 angeordnet ist. Zwischen dem Rahmen 11, 12 ist ein Support 14 befestigt, auf welchem zwei Auflageschienen 15, 16 längsverschieblich in Richtung der Pfeile 17, 18 gelagert sind. Die Auflageschienen 15, 16 sind an ihrer oberen Stirnseite schneidkantenförmig ausgestaltet. Auf diesen Kanten wird ein Filtereinsatz 19 aufgelegt. Dieser Filtereinsatz 19 besteht aus einem Filterpapierelement 20, zwei Endscheiben 21, 22 und einem hier gestrichelt dargestellten, in dem Filterpapierelement angeordneten Stützrohr 23. Oberhalb des Rahmens 11, 12 befindet sich ein an dem Träger 13 angeordneter Druckluftzylinder 24. An der Kolbenstange 25 des Druckluftzylinders ist ein Stempel 26 angebracht. Die Größe des Stempels 26 ist so dimensioniert, daß selbst die längstmöglichen Filtereinsätze über ihre Gesamtlänge von dem Stempel 26 erfaßt werden können.

Zum Trennen der Endscheiben 21, 22 von dem Filterpapierelement bewegt sich der Stempel nach unten und schert damit die Endscheiben von dem, mittels der Auflageschienen 15, 16 abgestützten Filterpapierelement, ab. Anschließend kehrt der Stempel 26 wieder in die hier gezeigte Posititon zurück. Die einzelnen Elemente des Filtereinsatzes können entnommen werden und ein neuer Filtereinsatz kann auf die Auflageschienen aufgelegt werden.

Für eine ordnungsgemäße Funktion der Einrichtung ist es erforderlich, daß die Auflageschienen 15, 16 so eingestellt werden, daß sie den Filtereinsatz 19 möglichst nahe der Endscheiben 21, 22 unterstützen, so daß bei Einwirkung des Stempels 26 kein Abknicken der Enden des Filtereinsatzes erfolgt.

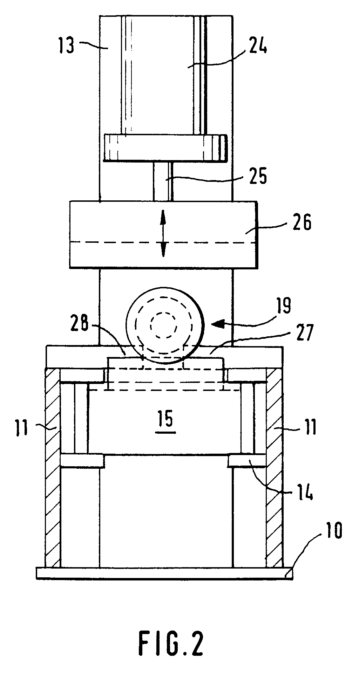

In Figur 2 ist die Einrichtung gemäß Figur 1 in einer Vorderansicht dargestellt. Gleiche Elemente sind mit gleichen Bezugszeichen versehen. In dieser Figur ist zu erkennen, daß auf den Auflageschienen 15 Lagerklötze 27, 28 angeordnet sind. Diese verhindern ein Abrollen des Filtereinsatzes 19.

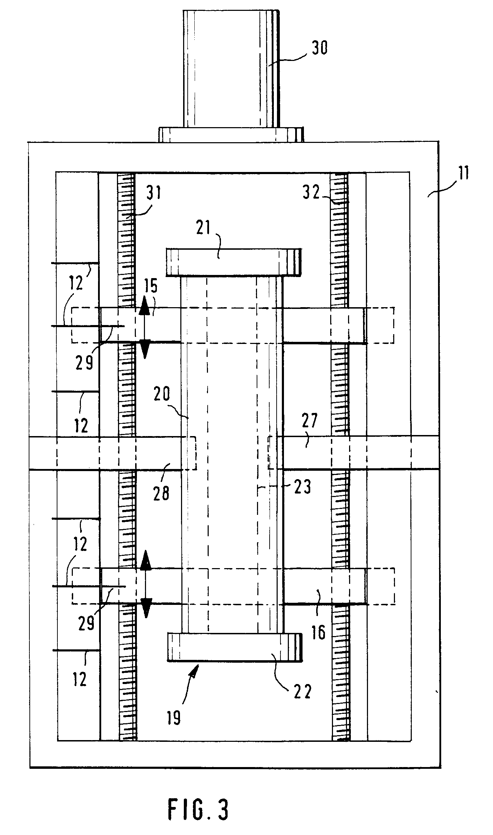

Die Figur 3 zeigt eine Draufsicht auf den Rahmen 11 mit den beiden Auflageschienen 15, 16 und einem darauf befindlichen Filtereinsatz 19. Auf dem Rahmen sind seitlich Markierungen 12 aufgebracht, die mit Markierungen 29 zusammenwirken und eine Einstellung der Auflageschienen anhand der Größenbezeichnung des zu trennenden Filtereinsatzes ermöglichen. In dieser Figur 3 ist ferner eine Antriebseinrichtung 30 für die Auflageschienen dargestellt. Diese Antriebseinrichtung 30 ist beispielsweise ein pneumatischer oder elektrischer Antrieb, der zwei Gewindespindeln 31, 32 bewegt, wobei diese Gewindespindeln die Auflageschienen verstellen.

Um das Papierelement oder die metallischen Teile des Filtereinsatzes in ihrem Volumen zu reduzieren, kann eine einfache Presse vorgesehen sein, die mit einem hydraulisch oder pneumatisch angetriebenen Pressenstempel die Teile des Filtereinsatzes separat zusammenpreßt.

### Bezugszeichenliste

- 10: Untergestell
- 11: Rahmen
- 12: Markierung
- 13: Träger
- 14: Support
- 15: Auflageschiene
- 16: Auflageschiene
- 17: Pfeil
- 18: Pfeil
- 19: Filtereinsatz
- 20: Filterpapierelement
- 21: Endscheibe
- 22: Endscheibe
- 23: Stützrohr
- 24: Druckluftzylinder
- 25: Kolbenstange
- 26: Stempel
- 27: Lagerklotz
- 28: Lagerklotz
- 29: Markierung
- 30: Antriebseinrichtung

## Patentansprüche

1. Einrichtung zum Trennen von Filtereinsätzen, insbesondere von ölwechselfiltern, wobei diese Filtereinsätze ein Filterpapierelement (20) und ein, insbesondere matallisches, innen liegendes Stützrohr (23) sowie metallische Endscheiben (21, 22) aufweisen,
- wobei zwei Auflageschienen (15, 16) in einem Rahmen (11) gegeneinander verschiebbar gelagert sind und
- senkrecht zu der Verschieberichtung der beiden Schienen und auf deren Längskanten gerichtet, ein Stempel (26) vorgesehen ist, der mittels eines Antriebssystems eine Bewegung längs der Senkrechten ausführt, derart, daß der Stempel (26) einen auf die beiden Schienen (15, 16) aufgelegten Filtereinsatz (19) zusammenpreßt und damit die Endscheiben (21, 22) von dem Papierelement abtrennt.

2. Einrichtung nach Anspruch 1, wobei eine Antriebseinheit (30) vorgesehen ist, welche die Schienen gegeneinander verschiebt.

3. Einrichtung nach Anspruch 1 oder 2, wobei an den, die Schienen tragenden Rahmen, Markierungen (12, 29) vorgesehen sind, die entsprechend der Größe des zu trennenden Filtereinsatzes (19) eine lagerichtige Position der Schienen (15, 16) definieren.

4. Einrichtung nach einem der vorhergehenden Ansprüche, wobei das Antriebssystem ein Druckluftzylinder (24) ist, der pneumatisch bewegbar ist.

5. Einrichtung nach einem der vorhergehenden Ansprüche, wobei auf den Schienen (15, 16) Stützelemente (27, 28) vorgesehen sind, die ein Abrollen des Filtereinsatzes (19) verhindern.

6. Einrichtung nach einem der vorhergehenden Ansprüche, dadurch gekennzeichnet, daß das Papierelement und/oder die Enscheiben und/oder das Stützrohr in wenigstens einer Presse zusammengepreßt wird.
